# EUROPEAN PATENT SPECIFICATION

(11) **EP 2 284 021 B1**
(45) Date of publication and mention of the grant of the patent: **09.04.2014**
(21) Application number: 09746344.2
(22) Date of filing: 11.05.2009
(51) Int. Cl.: B60B 35/18, B21D 39/00, B21J 9/02, B21K 1/40, B60B 35/14, F16C 33/64, B21D 53/10, B23P 11/00, B60B 35/12

(54) **METHOD FOR FORMING A WHEEL BEARING DEVICE**
VERFAHREN ZUR HERSTELLUNG EINER RADLAGERVORRICHTUNG
PROCÉDÉ DE FORMATION D UN DISPOSITIF DE PALIER DE ROUE

(30) Priority: 13.05.2008 JP 2008126058
(43) Date of publication of application: 16.02.2011
(73) Proprietor: NTN Corporation, Osaka-shi, Osaka 550-0003 (JP)
(72) Inventor: SERA, Akira, Iwata-shi Shizuoka 438-8510 (JP); NUMAMOTO, Jun, Iwata-shi Shizuoka 438-8510 (JP)
(74) Representative: Cohausz & Florack
(86) International application number: PCT/JP2009/002034
(87) International publication number: WO 2009/139137

(56) References cited:
- WO-A1-2006/105748
- DE-A1-102005 009 938
- DE-A1-102005 018 127
- DE-A1-102005 036 659
- JP-A- 63 184 501
- JP-A- 2001 162 338
- JP-A- 2003 211 908
- JP-A- 2005 036 905
- JP-A- 2007 062 647
- JP-A- 2007 230 551
- JP-A- 2007 271 045
- JP-A- 2007 290 681
- JP-A- 2007 319 865
- US-A- 4 893 960

## Description

### Field of the Invention

The present invention relates to a method for forming a wheel bearing apparatus for rotatably supporting a driving wheel of a vehicle, such as an automobile, and more particularly, to a method for simultaneously forming a caulking portion and a face-spline on a hub wheel of a wheel bearing apparatus formed as a separable unit of a bearing portion and a constant velocity universal joint.

### Description of Background Art

A power transmitting apparatus of a vehicle, such as an automobile, for transmitting engine power to its wheels is required to absorb both radial and axial displacements as well as a moment variation of the power transmitting apparatus from wheels caused by bounds and cornering of a vehicle during its running on a rough road. Accordingly, one end of a driving shaft interposed between an engine side and a driving wheel side of the power transmitting apparatus is connected to a differential gear unit, via a slide type constant velocity universal joint, and the other end of the driving shaft is connected to a wheel, via a wheel bearing apparatus including a immovable type constant velocity universal joint.

Recently, an improvement of fuel consumption has been strongly desired in view of resource saving or environmental pollution. A reduction of weight of the wheel bearing apparatus, among other automobile parts, has especially been desired for achieving the improvement of fuel consumption. Although various proposals have been made regarding the weight reduction of the wheel bearing apparatus, in assembling sites and servicing markets of automobile, reduction of cost by simplifying the assembling and disassembling works has also been a very important factor.

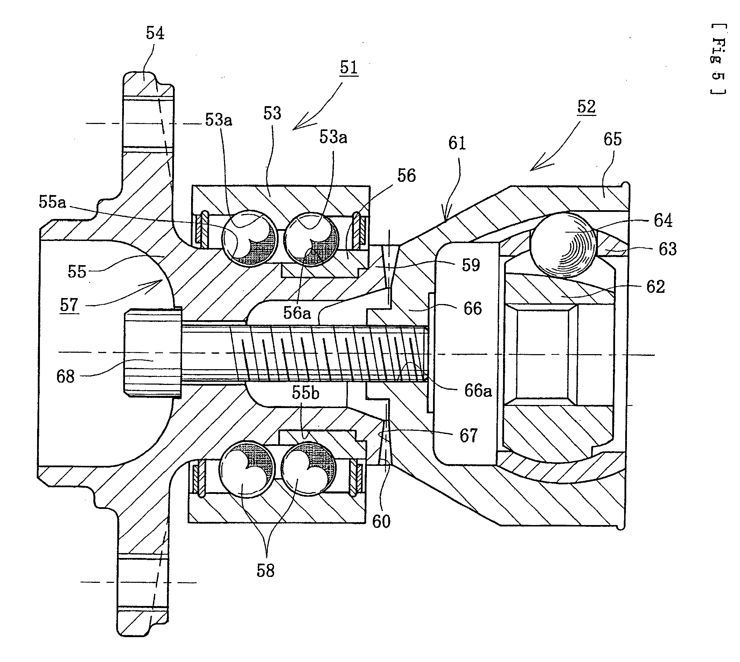

In Fig. 5, there is shown one representative example of a wheel bearing apparatus that can satisfy these requirements. The wheel bearing apparatus is formed as a separable unit comprising a double row rolling bearing 51 and a constant velocity universal joint 52. The double row rolling bearing 51 comprises an outer member 53 formed integrally, on its inner circumference, with double row outer raceway surfaces 53a, 53a, an inner member 57 including a hub wheel 55 and an inner ring 56 formed with a double row inner raceway surfaces 55a, 56a respectively, and double row balls 58, 58 rollably contained between the outer and inner raceway surfaces. The double row inner raceway surfaces 55a, 56a of the inner member 57 are arranged opposite to the double row outer raceway surfaces 53a, 53a of the outer member 53. The hub wheel 55 has a wheel mounting flange 54 formed integrally therewith at its one end and a cylindrical portion 55b axially extending from the inner raceway surface 55a. The inner ring 56 is press-fitted onto the cylindrical portion 55b of the hub wheel 55. The inner ring 56 being axially rigidly secured by a caulking portion 59 formed by plastically deforming the cylindrical portion 55b of the hub wheel 55 radially outward. A face-spline 60 is formed on an inner end face of the caulking portion 59 for torque transmission.

The constant velocity universal joint 52 comprises an outer joint member 61, a joint inner ring 62, a cage 63, and torque transmitting balls 64. The outer joint member 61 comprises a cup-shaped portion 65 and a shoulder portion 66 forming the bottom of the cup-shaped portion 65 in which an inner thread 66a is formed. An end face of the shoulder portion 66 is formed with a face-spline 67 which engages the face-spline 60 formed on the inner end face of the caulking portion 59 so that a rotational torque from a driving shaft (not shown) can be transmitted to the wheel mounting flange 54, via the constant velocity universal joint 52 and the hub wheel 55.

A fastening bolt 68 is screwed in the inner thread 66a on the shoulder portion 66 to press-engage the face-splines 67, 60 each other and to separably unite the double row rolling bearing 51 and the constant velocity universal joint 52. Accordingly it is possible to reduce both weight and size of the wheel bearing apparatus and to simplify assembly and disassembly thereof.

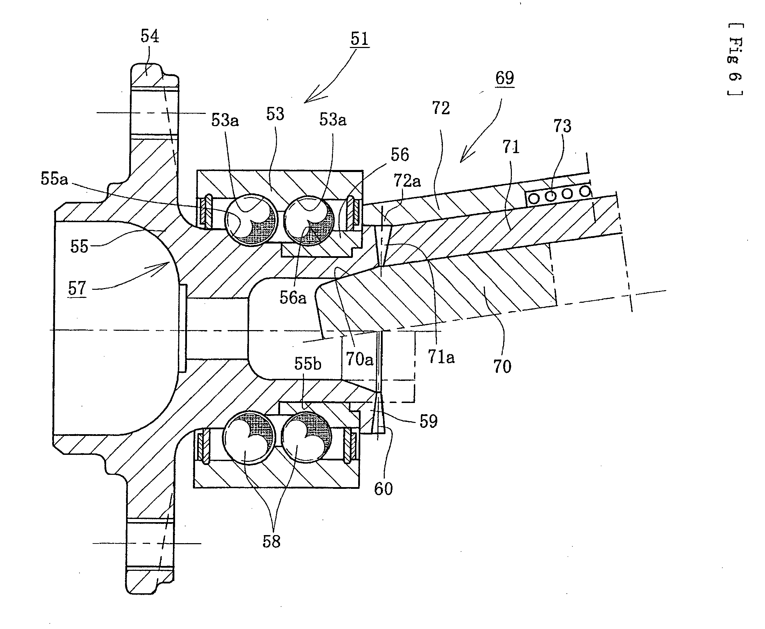

As shown in Fig. 6, the face-spline 60 of the caulking portion 59 is formed simultaneously with the formation of the caulking portion 59 by a caulking tool 69. The caulking tool 69 is formed with a guiding portion 70a of tapered configuration at its tip end and comprises a mandrel 70 adapted to be arranged at an inclined angle relative to an axis of the hub wheel 55, an inner sleeve 71 formed at its tip end with teeth 71a, and an outer sleeve 72 having a confining portion 72a for limiting radial expansion of the caulking portion 59. A coil spring 73 is interposed between the outer and inner sleeves 72 and 71 so that the outer sleeve 72 can be moved independently relative to the inner sleeve 71.

The caulking tool 69 is made to have a swing motion by rotating the hub wheel 55 around its central axis. The end portion of the cylindrical portion 55b of the hub wheel 55 is plastically deformed by the swing motion of the caulking tool 69 and the caulking portion 59 is formed. During the formation of the caulking portion 59, the face-spline 60 is also simultaneously formed by pushing the teeth 71a of the inner sleeve 71 against the caulking portion 59.

### Document of Prior Art

### Patent Document

Patent Document 1: US PAT. NO. 4893960

### Disclosure of the Invention

### Problems to be solved by the Invention

In such a wheel bearing apparatus, since the face-spline 60 can be formed simultaneously with the caulking portion 59 by the swing caulking, it is possible to improve the workability as well as to reduce the number of machining steps. Thus, it is possible to reduce the manufacturing cost. However, there have been several problems, such as that metal molds of the caulking tool are complicated and thus their machining, assembly and management manpower are increased, that material of the hub wheel is liable to be entered into gaps between the mandrel 70 and sleeves 71, 72 and thus burrs are generated and separated burrs are remained in the working site and therefore reduce the workability, and that burrs generated on the caulking portion 59 and/or the face-spline 60 would detract the quality of the wheel bearing apparatus.

It is, therefore, an object of the present invention to provide a method for forming a wheel bearing apparatus, which can simplify the caulking tool and thus can reduce the manufacturing cost and also prevents generation of burrs, and thus improves the quality of the wheel bearing apparatus. Means for solving the Problems

For achieving the object of the present invention, there is provided, according to the present invention of claim 1, a method for forming a wheel bearing apparatus comprising an outer member formed integrally, on its inner circumference, with double row outer raceway surfaces; an inner member comprising a hub wheel and at least one inner ring and being formed with a double row inner raceway surfaces to be arranged opposite to the double row outer raceway surfaces, the hub wheel having a wheel mounting flange formed integrally therewith at its one end and a cylindrical portion axially extending from the inner raceway surface, and the inner ring being press-fitted onto the cylindrical portion of the hub wheel; double row rolling elements rollably contained between the inner and outer raceway surfaces of the inner member and the outer member; the inner ring being axially secured rigidly by a caulking portion formed by plastically deforming the cylindrical portion of the hub wheel radially outward; and face-spline for torque transmission being formed on an end face of the caulking portion characterized in that the end portion of the cylindrical portion is pre-formed as a cylinder prior to its plastic deformation to form the caulking portion; that a caulking tool comprises an integrally formed punch and a swing shaft, the integrally formed punch having a nose portion projected from a bottom surface of the integrally formed punch at its center adapted to be abutted against the end portion of the cylinder at a predetermined inclined angle relative to the inner circumferential surface of the cylinder and teeth formed around the nose portion for forming the face-spline by plastically deforming the end face of the caulking portion, and the swing shaft having the integrally formed punch rigidly secured thereon so that the phase of the integrally formed punch is not shifted relative to the hub wheel and also having a central axis forming a predetermined inclined angle relative to a central axis of the hub wheel; and that the face-spline is formed simultaneously with the caulking portion by advancing the caulking tool toward the hub wheel, pushing the integrally formed punch against the end portion of the cylinder with a predetermined working force, and then rotating a main shaft, having a rotational axis corresponding to the central axis of the hub wheel, to cause a swing motion of the caulking tool.

In the method for forming a wheel bearing apparatus according to the present invention of claim 1 in which the inner ring is axially rigidly secured by a caulking portion formed by plastically deforming the cylindrical portion of the hub wheel radially outward, and face-spline for torque transmission is formed on an end face of the caulking portion, since that the end portion of the cylindrical portion is pre-formed as a cylinder prior to its plastic deformation to form the caulking portion; that a caulking tool comprises an integrally formed punch and a swing shaft, the integrally formed punch having a nose portion projected from a bottom surface of the integrally formed punch at its center adapted to be abutted against the end portion of the cylinder at a predetermined inclined angle relative to the inner circumferential surface of the cylinder and teeth formed around the nose portion for forming the face-spline by plastically deforming the end face of the caulking portion, and the swing shaft having the integrally formed punch rigidly secured thereon so that the phase of the integrally formed punch is not shifted relative to the hub wheel and also having a central axis forming a predetermined inclined angle relative to a central axis of the hub wheel; and that the face-spline is formed simultaneously with the formation of the caulking portion by advancing the caulking tool toward the hub wheel, pushing the integrally formed punch against the end portion of the cylinder with a predetermined working force, and then rotating a main shaft, having a rotational axis corresponding to the central axis of the hub wheel, to cause a swing motion of the caulking tool, it is possible to simplify the structure of the metal molds, and to reduce the number of machining, assembly and management steps of the metal molds and thus the manufacturing cost. Accordingly, it is possible to prevent problems such as generation of burrs on the caulking portion and/or the face-spline and deposition of fallen-off burrs on the working site, and thus it is possible to improve quality of the wheel bearing apparatus.

It is preferable, as defined in claim 2, that the inclined angle of the central axis of the swing shaft relative to the central axis of the hub wheel is set within a range of 4-6°.

It is preferable, as defined in claim 3, that the inclined angle of the nose portion of the integrally formed punch is set within a range of 15-35°.

It is also preferable as defined in claim 4 that the integrally formed punch is secured to the swing shaft via a key.

It is preferable as defined in claim 5 that the hub wheel is vertically placed on a pedestal on which a plurality of knock-pins are mounted so that the outer side surface of the wheel mounting flange is contacted against the top surface of the pedestal, the knock-pins being fitted through apertures in which hub bolts are press-fitted. This makes it possible to firmly secure the hub wheel on the pedestal without requiring any other fastening means.

It is preferable, as defined in claim 6, that an annular groove is formed on the outer circumferential surface of the cylinder of the cylindrical portion, a cross-sectional configuration of the annular groove having a depth of 0.5-1.0 mm, an inner side circular arc surface of a radius of curvature Ri and an outer side circular arc surface of a radius of curvature Ro, the radius of curvature Ri of the inner side circular arc surface being set smaller than the radius of curvature Ro of the outer side circular arc surface (Ri□Ro), and the annular groove extending in a region from a position inner than a position corresponding to a largest radial end of the inner raceway surface of the inner ring to a position beyond the position corresponding the largest radial end of the inner raceway surface by a predetermined distance through a rounded corner of the inner ring. This enables the cylinder to be easily deformed during the caulking process and thus to suppress deformation of the inner ring due to the caulking process.

It is preferable, as defined in claim 7, that the rounded corner of the inner ring has a circular arc surface in its cross-section having a predetermined radius of curvature r1, and the radius of curvature Ri of the inner side circular arc surface is set larger than the radius of curvature r1 of the rounded corner (r1≤Ri). This makes it possible to prevent the cylinder from being damaged, such as cracks, by the caulking process and the inner ring from being deformed.

### Effects of the Invention

According to the method for forming a wheel bearing apparatus, since it comprises an outer member formed integrally, on its inner circumference, with double row outer raceway surfaces; an inner member comprising a hub wheel and at least one inner ring and being formed with a double row inner raceway surfaces to be arranged opposite to the double row outer raceway surfaces, the hub wheel having a wheel mounting flange formed integrally therewith at its one end and a cylindrical portion axially extending from the inner raceway surface, and the inner ring being press-fitted onto the cylindrical portion of the hub wheel; double row rolling elements rollably contained between the inner and outer raceway surfaces of the inner member and the outer member; the inner ring being axially rigidly secured by a caulking portion formed by plastically deforming the cylindrical portion of the hub wheel radially outward; and face-spline for torque transmission being formed on an end face of the caulking portion and is characterized in that the end portion of the cylindrical portion is pre-formed as a cylinder prior to its plastic deformation to form the caulking portion; that a caulking tool comprises an integrally formed punch and a swing shaft, the integrally formed punch having a nose portion projected from a bottom surface of the integrally formed punch at its center adapted to be abutted against the end portion of the cylinder at a predetermined inclined angle relative to the inner circumferential surface of the cylinder and teeth formed around the nose portion for forming the face-spline by plastically deforming the end face of the caulking portion, and the swing shaft having the integrally formed punch rigidly secured thereon so that the phase of the integrally formed punch is not shifted relative to the hub wheel and also having a central axis forming a predetermined inclined angle relative to a central axis of the hub wheel; and that the face-spline is formed simultaneously with the caulking portion by advancing the caulking tool toward the hub wheel, pushing the integrally formed punch against the end portion of the cylinder with a predetermined working force, and then rotating a main shaft, having a rotational axis corresponding to the central axis of the hub wheel, to cause a swing motion of the caulking tool, it is possible to simplify the structure of the metal molds, and to reduce the number of machining, assembly and management steps of the metal molds and thus the manufacturing cost. Accordingly, it is possible to prevent problems such as generation of burrs on the caulking portion and/or the face-spline and deposition of fallen-off burrs onto the working site, and thus to improve quality of the wheel bearing apparatus.

### Brief description of Drawings

[Fig. 1] A longitudinal section view showing one embodiment of the wheel bearing apparatus for a vehicle of the present invention;
[Fig. 2] An explanatory view showing a caulking process of Fig. 1;
[Fig. 3] Fig. 3(a) is an enlarged partial view of Fig. 2, and Fig. 3(b) is a further enlarged partial view of Fig. 3(a);
[Fig. 4] An explanatory view showing the caulking process;
[Fig. 5] A longitudinal section view showing a wheel bearing apparatus for a vehicle of the prior art; and
[Fig. 6] An explanatory view showing the caulking process of Fig. 5.

### A preferable mode for carrying out the Invention

One mode for carrying out the present invention is a method for forming a wheel bearing apparatus comprising an outer member having an integrally formed body mounting flange to be mounted on a suspension apparatus and formed integrally, on its inner circumference, with double row outer raceway surfaces; an inner member comprising a hub wheel and at least one inner ring and being formed with a double row inner raceway surfaces to be arranged opposite to the double row outer raceway surfaces, the hub wheel having a wheel mounting flange formed integrally therewith at its one end and a cylindrical portion axially extending from the inner raceway surface, and the inner ring being press-fitted onto the cylindrical portion of the hub wheel; double row rolling elements rollably contained between the inner and outer raceway surfaces of the inner member and the outer member; the inner ring being axially rigidly secured by a caulking portion formed by plastically deforming the cylindrical portion of the hub wheel radially outward; and face-spline for torque transmission being formed on an end face of the caulking portion characterized in that the end portion of the cylindrical portion is pre-formed as a cylinder prior to its plastic deformation to form the caulking portion; that a caulking tool comprises an integrally formed punch and a swing shaft, the integrally formed punch having a nose portion projected from a bottom surface of the integrally formed punch at its center adapted to be abutted against the end portion of the cylinder at an angle of 15-35° relative to the inner circumferential surface of the cylinder and teeth formed around the nose portion for forming the face-spline by plastically deforming the end face of the caulking portion, and the swing shaft having the integrally formed punch rigidly secured thereon so that the phase of the integrally formed punch is not shifted relative to the hub wheel and also having a central axis forming an inclined angle of 4-6°relative to a central axis of the hub wheel; and that the face-spline is formed simultaneously with the caulking portion by advancing the caulking tool toward the hub wheel, pushing the integrally formed punch against the end portion of the cylinder with a predetermined working force, and then rotating a main shaft having a rotational axis corresponding to the central axis of the hub wheel to cause a swing motion of the caulking tool.

### Preferred Embodiment

One preferred embodiment of the present invention will be hereinafter described with reference to the drawings.

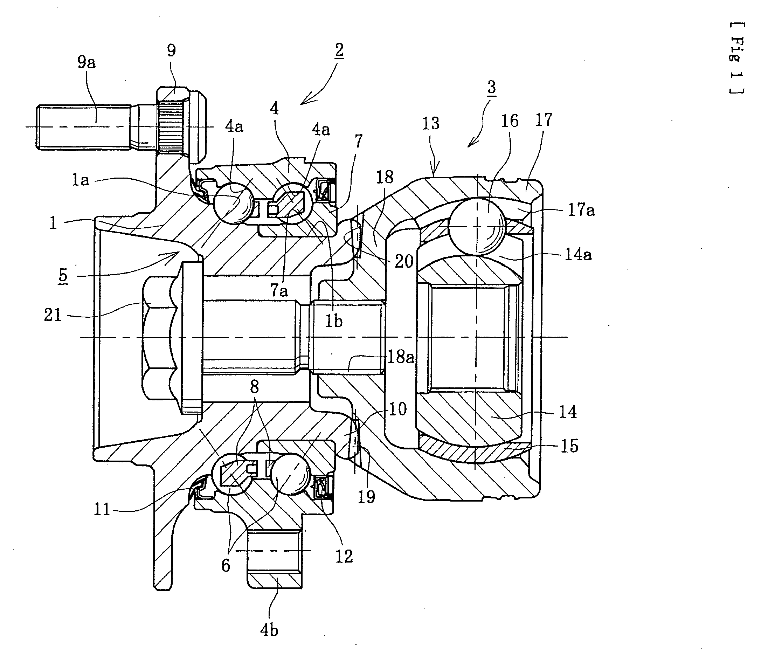

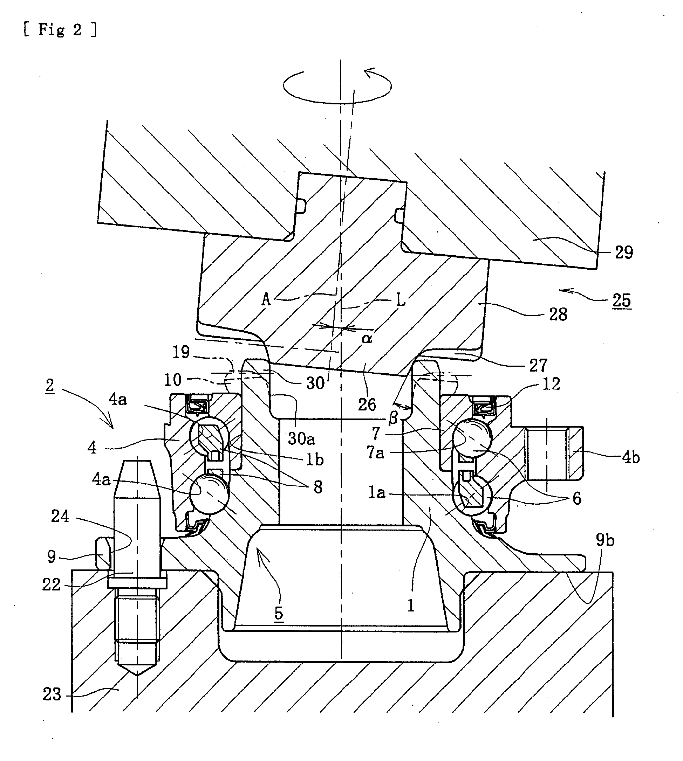

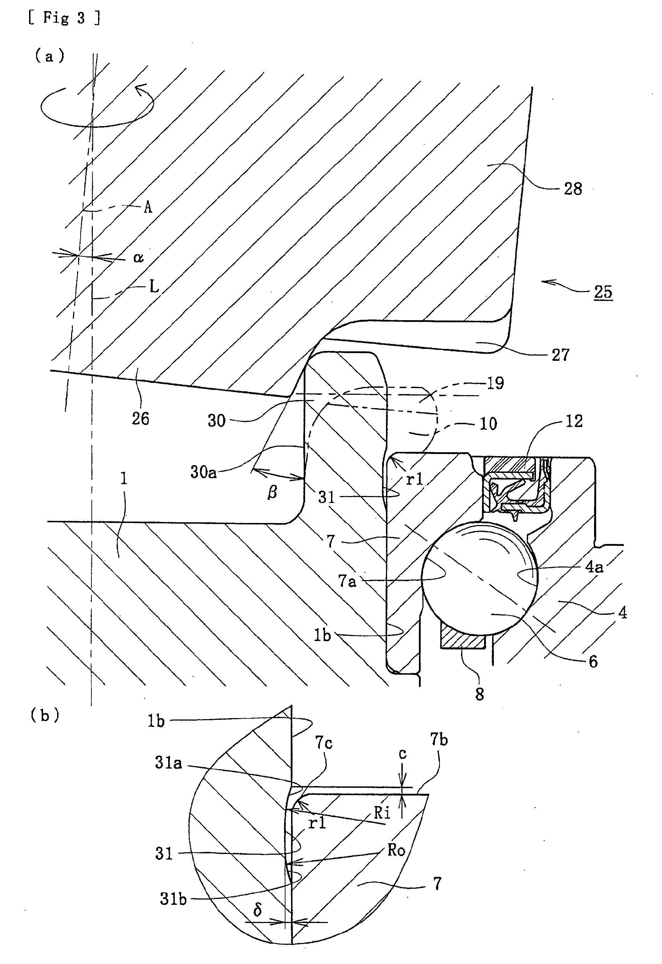

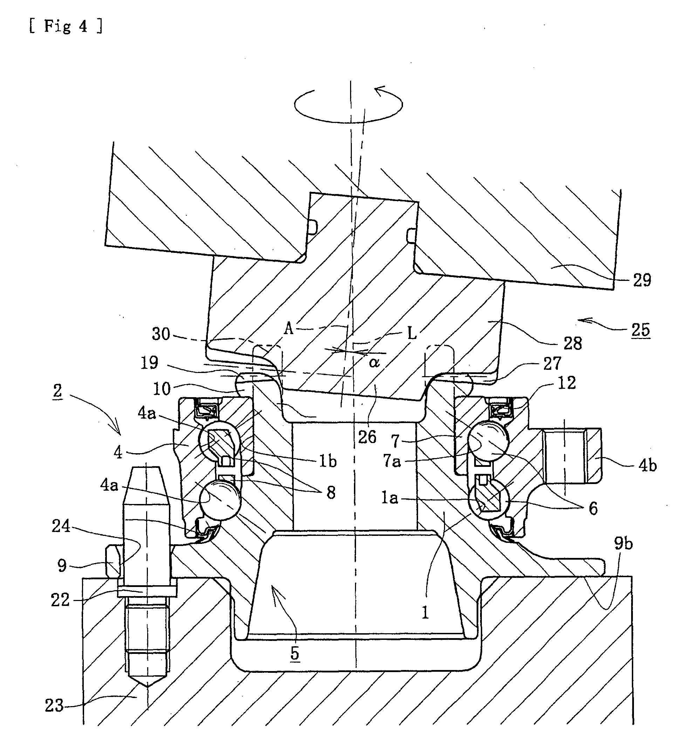

Fig. 1 is a longitudinal section view showing one embodiment of the wheel bearing apparatus for a vehicle of the present invention, Fig. 2 is an explanatory view showing a caulking process of Fig. 1, Fig. 3(a) is an enlarged partial view of Fig. 2, Fig. 3(b) is a further enlarged partial view of Fig. 3(a), and Fig. 4 is an explanatory view showing the caulking process. In descriptions below, a term "outer-side" defines a side which is positioned outside of a vehicle body (left-hand side of Fig. 1) and a term "innerside" defines a side which is positioned inside of a vehicle body (right-hand side of Fig. 1) when the bearing apparatus is mounted on the vehicle body.

The wheel bearing apparatus has a so-called "third generation type" structure in which a hub wheel 1, a double row rolling bearing 2 and a constant velocity universal joint 3 are separably united. The double row rolling bearing 2 comprises an outer member 4, an inner member 5, and double row rolling elements (balls) 6, 6.

The outer member 4 is made of medium/high carbon steel such as S53C including carbon of 0.40-0.80% by weight and integrally formed, on its outer circumference, with body mount flange 4b adapted to be mounted on a body (not shown) of vehicle and also formed, on its inner circumference, with double row outer raceway surfaces 4a, 4a. The double row outer raceway surfaces 4a, 4a are hardened by high frequency induction quenching as having a surface hardness of 58-64 HRC.

On the other hand, the inner member 5 comprises the hub wheel 1 and an inner ring 7 and double row inner raceway surfaces 1a, 7a, arranged opposite to the double row outer raceway surfaces 4a, 4a, formed respectively on the hub wheel 1 and the inner ring 7. The double row rolling elements 6, 6 are contained between the inner and outer raceway surfaces 1a, 7a; 4a, 4a and rollably held therein by cages 8, 8. Seals 11, 12 are mounted in annular openings between the outer member 4 and the inner member 5 to prevent leak of grease contained within the bearing apparatus as well as entering of rain water or dusts into the bearing.

The hub wheel 1 is integrally formed, on its outer side end, with a wheel mount flange 9 for mounting a wheel (not shown), on its outer circumference with an inner raceway surface 1a, and a cylindrical portion 1b axially extending from the inner raceway surface 1a. The inner ring 7 is press-fitted onto the cylindrical portion 1b via a predetermined interference. Hub bolts 9a are secured on the wheel mounting flange 9 at its circumferentially equidistant positions. The inner ring 7 is secured axially immovably relative to the hub wheel 1 by a caulking portion 10 formed by plastically deforming the end of the cylindrical portion 1b radially outward and by applying a predetermined pre-stress on the bearing.

The hub wheel 1 is made of medium/high carbon steel such as S53C including carbon of 0.40-0.80% by weight and is hardened by high frequency induction quenching as having surface hardness of 58-64 HRC in a region including seal land portion to which the outer side seal 11 slidably contacts to the cylindrical portion 1b via the inner raceway surface 1a. The caulking portion 10 is not quenched to keep its hardness at that of a blank after forging. The inner ring 7 and the rolling elements 6 are formed of high carbon chrome steel such as SUJ2 and dipping hardened to its core as having hardness of 54-64 HRC. This makes it possible not only to improve the abrasion resistance of a base of the wheel mounting flange 9 forming the seal land portion but also to improve the mechanical strength against the rotary bending load applied to the wheel mounting flange 9. Accordingly, it is possible to suppress the fretting abrasion caused in fitting surfaces between the cylindrical portion 1b and the inner ring 7 to minimum.

Although a third generation type in which the inner raceway surface 1a is directly formed on the circumference of the hub wheel 1 is shown here, the present invention may be applied to the first and second generation types in which a pair of inner rings are press-fitted on to a hub wheel. In addition, although an example using a double row angular contact ball bearing as rolling elements 6 is shown, it may be possible to use tapered rollers as the rolling elements 6.

The constant velocity universal joint 3 comprises an outer joint member 13, a joint inner ring 14, a cage 15, and torque transmitting balls 16. The outer joint member 13 comprises a cup-shaped portion 17, a shoulder portion 18 forming the bottom of the cup-shaped portion 18, and an inner thread 18a is formed on the shoulder portion 18. Track grooves 17a, 14a, which are curve shaped, are formed respectively on the inner circumference of the cup-shaped portion 17 and the outer circumference of the joint inner ring 14. The outer joint member 13 is made of medium/high carbon steel including carbon of 0.40-0.80% by weight such as S53C and the track grooves 17a, 14a and the outer circumference of the shoulder portion 18 is hardened by high frequency induction quenching as having surface hardness of 58-64 HRC.

In the present invention, a face-spline 19 is formed on the end face of the caulking portion 10 and another face-spline 20 mating with the face-spline 19 is formed on the end face of the shoulder portion 18 of the outer joint member 13 by plastic deforming process. Oppositely arranged face-splines 19, 20 are press-contacted each other by screwing a fastening bolt 21 into the inner thread 18a formed in the shoulder portion 18 and thus the hub wheel 1 and the outer joint member 13 are axially separably united.

Next, the forming process of the caulking portion 10 of Fig. 10 will be described with reference to Figs.2-4.

As shown in Fig. 2, the hub wheel 1 is vertically placed on a pedestal 23 on which a plurality of knock-pins 22 are mounted so that the outer side surface 9b of the wheel mounting flange 9 is contacted against the top surface of the pedestal 23. The knock-pins 22 are fitted through apertures 24 in which hub bolts 9a are press-fitted. This makes it possible to firmly secure the hub wheel 1 on the pedestal 23 without applying any other fastening means.

The end portion of the cylindrical portion 1b, which is to be deformed plastically to form the caulking portion 10, is pre-formed as a cylinder 30 prior to its plastic deformation. As shown in an enlarged view of Fig. 3, an annular groove 31 is formed on the outer circumferential surface of the cylinder 30 of the cylindrical portion 1b. A cross-sectional configuration of the annular groove 31 has a depth δ, an inner side circular arc surface 31a of a radius of curvature Ri and an outer side circular arc surface 31b of a radius of curvature Ro. This enables the cylinder 30 to be easily deformed during the caulking process and thus to suppress deformation of the inner ring 7. The annular groove 31 extends in a region from a position inner than a position corresponding to a largest radial end of the inner raceway surface 7a of the inner ring 7 to a position beyond the position corresponding the largest radial end of the inner raceway surface 7a through a rounded corner 7c of the inner ring 7 by a predetermined distance "c" from the largest end face 7b. The larger the width of the annular groove 31 the lower the hoop stress. However, if the width of the annular groove 31 is too large, not only a predetermined fastening force of the inner ring 7 would not be obtained due to lack of pressing force against the inner ring 7 but also the strength and rigidity of the hub wheel 1 would be detracted.

The annular groove 31 has a depth 5 of 0.5-1.0 mm. If the depth 5 is smaller than 0.5 mm, the effect brought by the provision of the annular groove 31 would be detracted. On the contrary, if the depthδis larger than 1.0 mm, the strength of the caulking portion 10 would be insufficient. The radius of curvature Ri of the inner side circular arc surface 31a is set larger than the radius of curvature r1 of a rounded corner 7c and smaller than the radius of curvature Ro of the outer side circular arc surface 31b (r1≤Ri≤Ro) and the radius of curvature Ri is set within a range of R1-10 mm. This enables the cylinder 30 to be easily deformed during the caulking process and thus to suppress deformation of the inner ring 7 due to the caulking process.

If the radius of curvature r1 of a rounded corner 7c is set smaller than 1.0 mm, damages such as micro cracks would be caused due to stress concentration at the root of the caulking portion 10 when any bending moment is applied to the wheel bearing apparatus during driving of a vehicle. On the contrary, if the radius of curvature r1 is larger than 2.5 mm, the inner ring 7 would be expanded radially outward when the cylinder 30 is plastically deformed and thus excessive hoop stress would be caused in the outer circumference of the inner ring 7.

A caulking tool 25 comprises an integrally formed punch 28 and a swing shaft 29. The integrally formed punch 28 has a nose portion 26 projected from a bottom surface of the punch integrally formed 28 at its center and teeth 27 formed around the nose portion 26 for forming the face-spline 19 by plastically deforming the end face of the caulking portion 10. The swing shaft 29 has having a central axis A forming a predetermined inclined angle αrelative to a central axis L of the hub wheel 1. The inclined angle αis herein set within a range of 4-6°. The integrally formed punch 28 is secured to the swing shaft 29 via a key so that it cannot rotate relative to the swing shaft 29.

The nose portion 26 of the integrally formed punch 28 is formed so that it is adapted to be abutted against the end portion of the cylinder 30 at a predetermined inclined angle β relative to the inner circumferential surface 30a of the cylinder 30. The inclined angle β is herein set within a range of 15-35°.

As shown in Fig. 4, the face-spline 19 is formed simultaneously with the formation of the caulking portion 10 by plastic deformation by advancing the caulking tool 25 toward the cylinder 30 of the hub wheel 1, pushing the integrally formed punch 28 against the end portion of the cylinder 30 with a predetermined working force, and then rotating a main shaft (not shown) having a rotational axis corresponding to the central axis L of the hub wheel 1 to cause a swing motion of the caulking tool 25.

According to the present invention, since the caulking portion 10 and the face-spline 19 on the end face of the caulking portion 10 can be formed simultaneously by plastic deformation by the integral punch 28, it is possible to simplify the structure of the metal molds, and to reduce the number of machining, assembly and management steps of the metal molds. This reduces the manufacturing cost. Accordingly, it is possible to prevent problems, such as generation of burrs on the caulking portion 10 and/or the face-spline 19 and deposition of fallen-off burrs onto the working site. Thus, it is possible to improve quality of the wheel bearing apparatus.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The method for forming a wheel bearing apparatus can be applied to forming of a wheel bearing apparatus in which a wheel bearing portion having a hub wheel and a constant velocity universal joint are connected via face-splines in a torque transmittable manner and they are separably united via a screw means.

### Descriptions of reference numerals

- 1: hub wheel
- 1a, 7a: inner raceway surface
- 1b: cylindrical portion
- 2: double row rolling bearing
- 3: constant velocity universal joint
- 4: outer member
- 4a: outer raceway surface
- 4b: body mounting flange
- 5: inner member
- 6: rolling element
- 7: inner ring
- 7b: larger end face
- 7c: rounded portion
- 8: cage
- 9: wheel mounting flange
- 9a: hub bolt
- 9b: outer side surface
- 10: caulking portion
- 11, 12: seal
- 13: outer joint member
- 14: joint inner ring
- 14a, 17a: track groove
- 15: cage
- 16: torque transmitting ball
- 17: cup portion
- 18: shoulder portion
- 18a: inner thread
- 19, 20: face-spline
- 21: fastening bolt
- 22: knock pin
- 23: pedestal
- 24: aperture
- 25: caulking tool
- 26: nose portion
- 27: teeth
- 28: punch
- 29: swing shaft
- 30: cylinder
- 30a: inner circumferential surface of cylinder
- 31: annular groove
- 51: double row rolling bearing
- 52: constant velocity universal joint
- 53: outer member
- 53a: outer raceway surface
- 54: wheel mounting flange
- 55: hub wheel
- 55a, 56a: inner raceway surface
- 56: inner ring
- 57: inner member
- 58: ball
- 59: caulking portion
- 60, 67: face-spline
- 61: outer joint member
- 62: joint inner ring
- 63: cage
- 64: torque transmitting ball
- 65: cup portion
- 66: shoulder portion
- 66a: inner thread
- 68: fastening bolt
- A: central axis of swing shaft
- c: distance of inner side end of annular groove from larger end of inner raceway surface of inner ring
- L: axial center of hub wheel
- r1: radius of curvature of rounded portion of inner ring
- r2: radius of curvature of circular arc surface of annular groove
- Ri: radius of curvature of inner side circular arc surface of annular groove
- Ro: radius of curvature of outer side circular arc surface of annular groove
- α: inclined angle of swing shaft
- β: inclined angle of nose portion
- δ: depth of annular groove

## Claims

1. A method for forming a wheel bearing apparatus comprising:
an outer member (4) formed integrally on its inner circumference with double row outer raceway surfaces (4a, 4a);
an inner member (5) comprising a hub wheel (1) and at least one inner ring (7) and being formed with a double row inner raceway surfaces (1a, 7a) to be arranged opposite to the double row outer raceway surfaces (4a, 4a), the hub wheel (1) having a wheel mounting flange (9) formed integrally at its one end and an axially extending cylindrical portion (1b) on its outer circumference and the inner ring (7) being press-fitted onto the cylindrical portion (1b) of the hub wheel (1);
double row rolling elements (6) rollably contained between the inner and outer raceway surfaces (1a, 7a and 4a, 4a) of the inner member (5) and the outer member (4);
the inner ring (7) being axially rigidly secured by a caulking portion (10) formed by plastically deforming the cylindrical portion (1b) of the hub wheel (1) radially outward; and
a face-spline (19) for torque transmission being formed on an end face of the caulking portion (10) **characterized in:**
**that** the end portion of the cylindrical portion (1b) is pre-formed as a cylinder (30) prior to its plastic deformation to form the caulking portion (10);
**that** a caulking tool (25) comprises an integrally formed punch (28) and a swing shaft (29), the integrally formed punch (28) having a nose portion (26) projected from a bottom surface of the integrally formed punch (28) at its center adapted to be abutted against the end portion of the cylinder (30) at a predetermined inclined angle (β) relative to the inner circumferential surface (30a) of the cylinder (30) and teeth (27) formed around the nose portion (26) for forming the face-spline (19) by plastically deforming the end face of the caulking portion (10), and the swing shaft (29) having the integrally formed punch (28) rigidly secured thereon so that the phase of the integrally formed punch (28) is not shifted relative to the hub wheel (1) and also having a central axis (A) forming a predetermined inclined angle (α) relative to a central axis (L) of the hub wheel (1); and
**that** the face-spline (19) is formed simultaneously with the formation of the caulking portion (10) by advancing the caulking tool (25) toward the hub wheel (1), pushing the integrally formed punch (28) against the end portion of the cylinder (30) with a predetermined working force, and then rotating a main shaft, having a rotational axis corresponding to the central axis (L) of the hub wheel (1), to cause a swing motion of the caulking tool (25).

2. A method for forming a wheel bearing apparatus of claim 1 wherein the inclined angle (α) of the central axis (A) of the swing shaft (29) relative to the central axis (L) of the hub wheel (1) is set within a range of 4-6°.

3. A method for forming a wheel bearing apparatus of claim 1 or 2 wherein the inclined angle (β) of the nose portion (26) of the integrally formed punch (28) is set within a range of 15-35°.

4. A method for forming a wheel bearing apparatus any one of claims 1-3 wherein the integrally formed punch (28) is secured to the swing shaft (29) via a key.

5. A method for forming a wheel bearing apparatus any one of claims 1-4 wherein the hub wheel (1) is vertically placed on a pedestal (23) on which a plurality of knock-pins (22) are mounted so that the outer side surface (9b) of the wheel mounting flange (9) is contacted against the top surface of the pedestal (23), the knock-pins (22) being fitted through apertures (24) in which hub bolts (9a) are press-fitted.

6. A method for forming a wheel bearing apparatus any one of claims 1-5 wherein an annular groove (31) is formed on the outer circumferential surface of the cylinder (30) of the cylindrical portion (1b), a cross-sectional configuration of the annular groove (31) having a depth (δ) of 0.5-1.0 mm, an inner side circular arc surface (31a) of a radius of curvature (Ri) and an outer side circular arc surface (31b) of a radius of curvature (Ro), the radius of curvature (Ri) of the inner side circular arc surface (31a) being set smaller than the radius of curvature (Ro) of the outer side circular arc surface (31b) (Ri≤Ro), and the annular groove (31) extending in a region from a position inner than a position corresponding to a largest radial end of the inner raceway surface (7a) of the inner ring (7) to a position beyond the position corresponding the largest radial end of the inner raceway surface (7a) through a rounded corner (7c) of the inner ring (7) by a predetermined distance (c) from the larger end face 7(b).

7. A method for forming a wheel bearing apparatus of claim 6 wherein the rounded corner (7c) of the inner ring (7) has a circular arc surface in its cross-section having a predetermined radius of curvature (r1), and the radius of curvature (Ri) of the inner side circular arc surface (31a) is set larger than the radius of curvature (r1) of the rounded corner (7c) (r1≤Ri).

## Patentansprüche

1. Verfahren zum Herstellen einer Radlagervorrichtung, die Folgendes umfasst:
ein äußeres Element (4), an dessen Innenumfang integral doppelreihige äußere Laufflächen (4a, 4a) ausgebildet sind;
ein inneres Element (5), das eine Radnabe (1) und mindestens einen inneren Ring (7) umfasst und mit doppelreihigen inneren Laufflächen (1a, 7a) ausgebildet ist, die gegenüber den doppelreihigen äußeren Laufflächen (4a, 4a) angeordnet sind, wobei die Radnabe (1) einen Radmontageflansch (9) aufweist, der integral an seinem einen Ende ausgebildet ist, und einen sich axial erstreckenden zylindrischen Abschnitt (1b) an seinem Außenumfang aufweist, wobei der innere Ring (7) auf den zylindrischen Abschnitt (1b) der Radnabe (1) gepresst ist;
doppelreihige Wälzelemente (6), die rollfähig zwischen den inneren und äußeren Laufflächen (1a, 7a und 4a, 4a) des inneren Elements (5) und des äußeren Elements (4) aufgenommen sind;
wobei der innere Ring (7) axial starr durch einen Stauchabschnitt (10) gesichert ist, der durch plastisches Verformen des zylindrischen Abschnitts (1b) der Radnabe (1) radial auswärts gebildet wird; und
eine Stirnverzahnung (19) zur Drehmomentübertragung, die an einer Endfläche des Stauchabschnitts (10) ausgebildet ist; **dadurch gekennzeichnet:**
**dass** der Endabschnitt des zylindrischen Abschnitts (1b) vor seiner plastischen Verformung, die den Stauchabschnitt (10) bildet, zu einem Zylinder (30) vorgeformt wird;
**dass** ein Stauchwerkzeug (25) einen integral ausgebildeten Stempel (28) und eine Schwenkwelle (29) umfasst, wobei der integral ausgebildete Stempel (28) einen Nasenabschnitt (26) aufweist, der von einer Unterseite des integral ausgebildeten Stempels (28) an seiner Mitte hervorsteht und dafür ausgelegt ist, an dem Endabschnitt des Zylinder (30) in einem vorgegebenen geneigten Winkel (β) relativ zu der Innenumfangsfläche (30a) des Zylinders (30) anzuliegen, und Zähne (27) aufweist, die um den Nasenabschnitt (26) herum ausgebildet sind, zum Herstellen der Stirnverzahnung (19) durch plastisches Verformen der Endfläche des Stauchabschnitts (10), und wobei der integral ausgebildete Stempel (28) starr an der Schwenkwelle (29) so befestigt ist, dass die Phase des integral ausgebildeten Stempels (28) nicht relativ zu der Radnabe (1) verschoben ist, und wobei die Schwenkwelle (29) des Weiteren eine Mittelachse (A) aufweist, die einen vorgegebenen geneigten Winkel (α) relativ zu einer Mittelachse (L) der Radnabe (1) bildet; und
**dass** die Stirnverzahnung (19) gleichzeitig mit der Bildung des Stauchabschnitts (10) ausgebildet wird, indem das Stauchwerkzeug (25) in Richtung der Radnabe (1) vorangeschoben wird, der integral ausgebildete Stempel (28) mit einer vorgegebenen Wirkkraft gegen den Endabschnitt des Zylinders (30) gedrückt wird und dann eine Hauptwelle gedreht wird, die eine Drehachse aufweist, die der Mittelachse (L) der Radnabe (1) entspricht, um eine Schwenkbewegung des Stauchwerkzeugs (25) zu veranlassen.

2. Verfahren zum Herstellen einer Radlagervorrichtung nach Anspruch 1, wobei der geneigte Winkel (α) der Mittelachse (A) der Schwenkwelle (29) relativ zu der Mittelachse (L) der Radnabe (1) auf einen Bereich von 4-6° eingestellt wird.

3. Verfahren zum Herstellen einer Radlagervorrichtung nach Anspruch 1 oder 2, wobei der geneigte Winkel (β) des Nasenabschnitts (26) des integral ausgebildeten Stempels (28) auf einen Bereich von 15-35° eingestellt wird.

4. Verfahren zum Herstellen einer Radlagervorrichtung nach einem der Ansprüche 1-3, wobei der integral ausgebildete Stempel (28) mittels einer Passfeder an der Schwenkwelle (29) befestigt ist.

5. Verfahren zum Herstellen einer Radlagervorrichtung nach einem der Ansprüche 1-4, wobei die Radnabe (1) vertikal auf einen Sockel (23) gestellt wird, auf dem mehrere Schlagstifte (22) so montiert sind, dass die äußere Seitenfläche (9b) des Radmontageflansches (9) an der Oberseite des Sockels (23) anliegt, wobei die Schlagstifte (22) durch Öffnungen (24) geschoben werden, in die Nabenbolzen (9a) gepresst werden.

6. Verfahren zum Herstellen einer Radlagervorrichtung nach einem der Ansprüche 1-5, wobei eine ringförmige Nut (3 1) an der Außenumfangsfläche des Zylinders (30) des zylindrischen Abschnitts (1b) ausgebildet ist, eine Querschnittskonfiguration der ringförmigen Nut (31) eine Tiefe (δ) von 0,5-1,0 mm, eine innenseitige kreisrunde Bogenfläche (31a) mit einem Krümmungsradius (Ri) und eine außenseitige kreisrunde Bodenfläche (31b) mit einem Krümmungsradius (Ro) aufweist, der Krümmungsradius (Ri) der innenseitigen kreisrunden Bogenfläche (31a) kleiner eingestellt ist als der Krümmungsradius (Ro) der außenseitigen kreisrunden Bogenfläche (31b) (Ri≤Ro), und die ringförmige Nut (31) sich in einer Region von einer Position, die weiter innen liegt als eine Position, die einem größten radialen Ende der inneren Lauffläche (7a) des inneren Rings (7) entspricht, zu einer Position jenseits der Position, die dem größten radialen Ende der inneren Lauffläche (7a) entspricht, durch eine gerundete Ecke (7c) des inneren Rings (7) hindurch um eine vorgegebene Distanz (c) von der größeren Endfläche 7(b) aus erstreckt.

7. Verfahren zum Herstellen einer Radlagervorrichtung nach Anspruch 6, wobei die gerundete Ecke (7c) des inneren Rings (7) eine kreisrunde Bogenfläche in ihrem Querschnitt aufweist, die einen vorgegebenen Krümmungsradius (r1) besitzt, und der Krümmungsradius (Ri) der innenseitigen kreisrunden Bogenfläche (31a) größer eingestellt ist als der Krümmungsradius (r1) der gerundeten Ecke (7c) (r1≤Ri).

## Revendications

1. Procédé de formation d'un agencement de roulement de roue comprenant :
un élément extérieur (4) formé en un seul tenant sur sa circonférence intérieur avec une double rangée de surfaces de chemin de roulement extérieures (4a, 4a) ;
un élément intérieur (5) comprenant un moyeu de roue (1) et au moins une bague intérieure (7) et étant formé avec une double rangée de surfaces de chemin de roulement intérieures (1a, 7a) disposées à l'opposé de la double rangée de surfaces de chemin de roulement extérieures (4a, 4a), le moyeu de roue (1) ayant une bride de montage de roue (9) formée en un seul tenant à une extrémité et une portion cylindrique s'étendant axialement (1b) sur sa circonférence extérieure et la bague intérieure (7) étant ajustée par pressage sur la portion cylindrique (1b) du moyeu de roue (1) ;
une double rangée d' éléments de roulement (6) contenus de manière roulante entre les surfaces de chemin de roulement intérieure et extérieure (1a, 7a et 4a, 4a) de l'élément intérieur (5) et l'élément extérieur (4) ;
la bague intérieure (7) étant fixée axialement de manière rigide par une portion de calfeutrage (10) formée par déformation plastique de la portion cylindrique (1b) du moyeu de roue (1) radicalement vers l'extérieur ; et
une cannelure frontale (19) à des fins de transmission de couple étant formée sur une face d'extrémité de la portion de calfeutrage (10) **caractérisé en ce que** :
la portion d'extrémité de la portion cylindrique (1b) est préformée comme un cylindre (30) avant sa déformation plastique afin de former la portion de calfeutrage (10) ;
un outil de calfeutrage (25) comprend un poinçon (28) formé en un seul tenant et un arbre oscillant (29), le poinçon formé en un seul tenant (28) ayant une portion de nez (26) protubérante à partir d'une surface de fond du poinçon (28) formé en un seul tenant à son centre adaptée afin de buter contre la portion d'extrémité du cylindre (30) à un angle incliné prédéterminé (β) par rapport à la surface circonférentielle intérieure (30a) du cylindre (30) et des dents (27) formées autour de la portion de nez (26) pour former la cannelure frontale (19) en déformant plastiquement la face d'extrémité de la portion de calfeutrage (10), et l'arbre oscillant (29) ayant le poinçon formé en un seul tenant (28) fixé de manière rigide sur celui-ci de sorte que la phase du poinçon formé en un seul tenant (28) ne soit pas décalée par rapport au moyeu de roue (1) et ayant aussi un axe central (A) formant un angle incliné prédéterminé (α) par rapport à un axe central (L) du moyeu de roue (1) ; et
la cannelure frontale (19) est formée simultanément avec la formation de la portion de calfeutrage (10) en avançant l'outil de calfeutrage (25) vers le moyeu de roue (1), en poussant le poinçon formé en un seul tenant (28) contre la portion d'extrémité du cylindre (30) avec une force de travail prédéterminée, et ensuite tourner un arbre principal, ayant un axe de rotation correspondant à l'axe central (L) du moyeu de roue (1), pour provoquer un mouvement oscillant de l'outil de calfeutrage (25).

2. Procédé de formation d'un dispositif de roulement de roue selon la revendication 1, dans lequel l'angle incliné (α) de l'axe central (A) de l'arbre oscillant (29) par rapport à l'axe central (L) du moyeu de roue (1) est réglé dans une plage de 4-6°.

3. Procédé de formation d'un dispositif de roulement de roue selon la revendication 1 ou 2, dans lequel l'angle incliné (β) de la portion de nez (26) du poinçon formé en un seul tenant (28) est réglé dans une plage de 15-35°.

4. Procédé de formation d'un dispositif de roulement de roue selon une quelconque des revendications 1-3, dans lequel e poinçon formé en un seul tenant (28) est fixé à l'arbre oscillant (29) via une clé.

5. Procédé de formation d'un dispositif de roulement de roue selon une quelconque des revendications 1-4, dans lequel le moyeu de roue (1) est placé verticalement sur un piédestal (23) sur lequel une pluralité de chevilles à percussion (22) sont montées de sorte que la surface latérale extérieure (9b) de la bride de montage de roue (9) soit contactée contre la surface de sommet du piédestal (23), les chevilles à percussion (22) étant ajustées à travers les ouverture (24) dans lesquelles les boulons de moyeu (9a) sont ajustés par pressage.

6. Procédé de formation d'un dispositif de roulement de roue selon une quelconque des revendications 1-5, dans lequel une cavité annulaire (31) est formée sur la surface circonférentielle extérieure du cylindre (30) de la portion cylindrique (1b), une configuration de section transversale de la rainure annulaire (31) ayant une profondeur (δ) de 0.5-1.0 mm, une surface d'arc circulaire du côté intérieur (31a) d'un rayon de courbure (Ri) et une surface d'arc circulaire de côté extérieur (31b) d'un rayon de courbure (Ro), le rayon de courbure (Ri) de la surface d'arc circulaire du côté intérieur (31a) étant réglé plus petit que le rayon de courbure (Ro) de la surface d'arc circulaire du côté extérieur (31b) (Ri≤Ro), et la rainure annulaire (31) s'étendant dans une région à partir d'une position plus intérieure qu'une position correspondant à une extrémité radiale la plus grande de la surface de chemin de roulement intérieur (7a) de la bague intérieure (7) vers une position au-delà de la position correspondant à l'extrémité radiale la plus grande de la surface de chemin de roulement intérieur (7a) à travers un coin arrondi (7c) de la bague intérieur (7) par une distance prédéterminée (c) à partir de la face d'extrémité plus grande 7(b).

7. Procédé de formation d'un dispositif de roulement de roue selon la revendication 6, dans lequel le coin arrondi (7c) de la bague intérieure (7) a une surface d'arc circulaire ayant un rayon de courbure prédéterminé (r1) dans sa section transversale, et le rayon de courbure (Ri) de la surface d'arc circulaire du côté intérieur (31a) est réglée plus grande que le rayon de courbure (r1) du coin arrondi (7c)(r1≤ri).
